# FASCICULE DE BREVET EUROPEEN

(11) **EP 1 347 546 B1**
(45) Date de publication et mention de la délivrance du brevet: **13.06.2007**
(21) Numéro de dépôt: 03290376.7
(22) Date de dépôt: 17.02.2003
(51) Int. Cl.: H01S 3/095, H01S 3/0937

(54) **Laser pompé par une source pyrotechnique**
Laser gepumpt durch eine pyrotechnische Quelle
Laser pumped by a pyrotechnical source

(30) Priorité: 18.02.2002 FR 0202005
(43) Date de publication de la demande: 24.09.2003
(73) Titulaire: COMPAGNIE INDUSTRIELLE DES LASERS CILAS, 91460 Marcoussis (FR)
(72) Inventeur: Roche, Jean-Michel, 91940 Les Ulis (FR); Cabaret, Louis, 91410 Plessis St Benoist (FR); Montagne, Jean-Eucher, 45000 Orleans (FR)
(74) Mandataire: Bonnetat, Christian

(56) Documents cités:
- FR-A- 2 775 134
- US-A- 3 836 865
- US-A- 5 033 058
- SPARIOSU K ET AL: "INTRACAVITY 1.549-MUM PUMPED 1.634-MUM ER:YAG LASERS AT 300 K" IEEE JOURNAL OF QUANTUM ELECTRONICS, IEEE INC. NEW YORK, US, vol. 30, no. 4, 1 avril 1994 (1994-04-01), pages 1044-1049, XP000456789 ISSN: 0018-9197

## Description

La présente invention concerne une source laser.

On sait qu'une source laser comporte, de façon générale, au moins :
- un élément actif dopé (généralement un barreau), dans lequel est engendré un phénomène d'amplification (laser) stimulé ;
- un système de pompage engendrant au moins un faisceau de pompage qui est émis dans ledit élément actif de manière à apporter l'énergie nécessaire à ladite amplification laser ; et
- une cavité optique qui confère au faisceau laser obtenu par cette amplification laser, ses caractéristiques de directivité et de géométrie.

La présente invention concerne plus particulièrement une source laser qui est susceptible d'émettre un faisceau laser de forte énergie et de grande puissance moyenne.

On sait, premièrement, que les sources laser connues qui sont formées pour émettre une forte énergie par impulsion, sont extrêmement volumineuses parce qu'elles comprennent des dispositifs annexes encombrants, qui sont nécessaires au fonctionnement de la cavité optique. Il s'agit notamment, pour des sources lasers pompées par flash ou par décharge, d'alimentations électriques nécessaires au stockage de l'énergie (bancs de condensateur et alimentation) et de circuits inductifs nécessaires à la décharge.

Deuxièmement, en ce qui concerne la génération par des sources laser d'un faisceau laser présentant une puissance moyenne élevée, on se heurte inévitablement à des problèmes thermiques au niveau du milieu amplificateur (élément actif), ce qui a pour conséquence de dégrader la qualité du faisceau laser émis, ainsi que le rendement global de ladite source laser. Diverses méthodes ont été prévues pour diminuer l'apport de chaleur dans le milieu actif ou en limiter les effets. On peut citer, à titre d'illustration, l'utilisation de géométries particulières du milieu amplificateur permettant de compenser les distorsions optiques indésirables.

Par ailleurs, si l'on souhaite engendrer des impulsions très énergétiques en cadence et donc accéder à une forte puissance, c'est-à-dire si l'on souhaite émettre un faisceau laser de forte énergie et de puissance moyenne élevée, on aboutit rapidement à des obstacles majeurs, à partir des solutions usuelles de pompage. En effet :
- une solution de pompage par flash nécessite un volume d'alimentation très important et bute sur une charge thermique insupportable ;
- une solution de pompage par diode conduit à un nombre de diodes très élevé, qui n'est généralement pas compatible avec les applications visées, notamment pour des raisons de coût ;
- une solution de pompage par explosion n'autorise en pratique qu'un seul tir ; et
- une solution de pompage par combustion de charges successives conduit à un échauffement du milieu actif qui n'est pas acceptable de la même manière qu'un pompage par flash.

Par conséquent, l'un des problèmes essentiels pour créer une source laser susceptible d'engendrer un faisceau laser présentant une énergie élevée et une puissance moyenne importante, concerne la réduction de la charge thermique, à laquelle est soumise la source laser.

Par ailleurs, par un article de Spariosu et Birnbaum, intitulé "Intracavity 1.549-µm Pumped 1.634-µm Er:YAG Lasers at 300 K" et paru dans la publication "IEEE Journal of Quantum Electronics", volume 30, n° 4, avril 1994, on connaît une source laser comportant :
- un générateur laser principal comprenant un matériau cristallin qui est dopé avec des ions de terre rare ; et
- un système de pompage comprenant un générateur laser auxiliaire de type monofréquence, qui est destiné à émettre le faisceau de pompage et qui est lui-même pompé, de façon usuelle, par des lampes flash. Ce générateur laser auxiliaire est fabriqué sous forme d'un barreau et est directement agencé dans la cavité optique du générateur laser principal de manière à réaliser le pompage à l'intérieur de cette dernière.

Toutefois, cette source laser connue, qui a pour but d'émettre un faisceau laser dans l'infrarouge proche, n'est pas en mesure, notamment pour des problèmes thermiques et d'apport d'énergie, d'engendrer un faisceau laser de forte énergie et de grande puissance moyenne.

La présente invention a pour objet de remédier à ces inconvénients. Elle concerne une source laser susceptible d'émettre au moins quelques impulsions laser successives d'énergie très élevée.

A cet effet, selon l'invention, ladite source laser du type comportant :
- un système de pompage pour engendrer au moins un faisceau de pompage secondaire, ledit système de pompage comprenant :
   . une source lumineuse de pompage susceptible d'émettre au moins un faisceau de pompage primaire ; et
   . un générateur laser primaire comportant au moins un premier moyen actif dopé, qui est susceptible d'absorber ledit faisceau de pompage primaire pour réaliser une amplification laser de sorte que ledit générateur laser primaire émette au moins un faisceau laser primaire monofréquence qui représente ledit faisceau de pompage secondaire ; et
- un générateur laser secondaire comportant une cavité optique et au moins un second moyen actif dopé, qui est susceptible d'absorber ledit faisceau de pompage secondaire pour réaliser une amplification laser de sorte que ledit générateur laser secondaire émette un faisceau laser secondaire qui représente ledit faisceau laser de la source laser, est remarquable en ce que ladite source lumineuse de pompage est une source pyrotechnique, en ce que ledit moyen actif dudit générateur laser primaire présente au moins une dimension qui est inférieure à une valeur prédéterminée, de préférence 10 millimètres, en ce que ledit générateur laser primaire est agencé à l'extérieur de ladite cavité optique dudit générateur laser secondaire, et en ce que ledit générateur laser secondaire présente un décalage Stokes qui est inférieur à une valeur prédéterminée.

Ainsi, grâce à l'invention, ladite source laser permet de remédier aux inconvénients précités. En effet :
- l'utilisation d'une source lumineuse pyrotechnique permet de stocker une quantité d'énergie très élevée dans un faible volume, généralement plus de 1 MJ par litre de produit actif, et donc de produire l'énergie lumineuse (élevée) nécessaire. De plus, la décharge lumineuse d'une telle source pyrotechnique n'est généralement pas destructrice, ce qui permet de prévoir un fonctionnement cadencé de la source laser ;
- la réalisation du générateur laser primaire avec au moins une dimension réduite (qui est inférieure à ladite valeur prédéterminée) et son agencement à l'extérieur de la cavité optique du générateur laser secondaire (ou principal) permettent de prévoir un refroidissement efficace et rapide de la source laser et donc de remédier au moins en partie au problème thermique précité. On notera que le faisceau laser engendré par un tel générateur laser primaire (précisé davantage ci-dessous) présente de très faibles qualités optiques, ce qui ne permet pas son utilisation comme générateur laser secondaire ou principal. En revanche, ce générateur laser primaire remplit parfaitement la fonction nécessaire (forte puissance avec une grande résistance à la charge thermique) pour son utilisation comme source de pompage ; et
- l'action combinée d'un pompage monofréquence et d'un faible décalage Stokes contribue également à réduire la production de chaleur. Le décalage Stokes (décalage en énergie) est, de préférence, inférieur à 0,1 eV, par photon émis.

Le principal objectif de la source laser conforme à l'invention est de fournir quelques impulsions successives d'énergie très élevée. Or, on sait qu'une composition pyrotechnique d'une masse de l'ordre de 1 kg est capable de fournir une énergie lumineuse utile d'environ 2 MJ. En supposant que les spectres d'émission du mélange pyrotechnique et d'absorption du premier moyen actif soient bien adaptés, le rendement optique global peut atteindre 5%, soit une énergie finale émise de 100 kJ. Cette énergie correspond à une puissance de 1 MW pendant 100 ms. Le taux de répétition de la source laser est limité par la vitesse de tir de la source pyrotechnique (limitée généralement par le temps d'éjection et de réarmement de cartouches pyrotechniques). A une cadence réaliste d'un tir toutes les cinq secondes, la puissance moyenne de pompage (engendrée par la source pyrotechnique) est donc de 400 kW et la puissance moyenne engendrée par la source laser conforme à l'invention est alors de 20 kW.

De façon avantageuse, ladite source lumineuse de pompage, qui comprend de préférence des cartouches pyrotechniques (sous forme de tubes ou de plaques), présente un spectre d'émission qui est adapté au spectre d'absorption du générateur laser primaire, ce qui permet de réduire la production de chaleur et d'accroître le rendement de la source laser.

En outre, selon l'invention :
- dans une première variante de réalisation, ledit moyen actif dudit générateur laser primaire comprend une pluralité de fibres, dont chacune présente un diamètre qui est inférieur à ladite valeur prédéterminée (de préférence 10 millimètres) ; et
- dans une seconde variante de réalisation, ledit moyen actif dudit générateur laser primaire est réalisé sous forme d'au moins une plaque, dont l'épaisseur est inférieure à ladite valeur prédéterminée. On notera que la réalisation sous forme de plaque engendre une résistance à la charge thermique beaucoup plus importante qu'une réalisation usuelle sous forme de barreau.

Dans cette seconde variante de réalisation, ledit générateur laser primaire comprend, de préférence, une pluralité de plaques qui sont uniformément réparties autour du second moyen actif du générateur laser secondaire, de manière à obtenir un pompage uniforme.

Par ailleurs, dans un premier mode de réalisation, ledit premier moyen actif du générateur laser primaire comprend un verre qui est dopé avec des terres rares, tandis que, dans un second mode de réalisation, ledit premier moyen actif du générateur laser primaire comprend un matériau céramique qui est dopé avec des terres rares.

En outre, avantageusement, ledit second moyen actif du générateur laser secondaire comprend un matériau cristallin ou un matériau céramique, qui est également dopé avec des terres rares.

Dans un premier mode de réalisation, ce second moyen actif du générateur laser secondaire comporte une pluralité de disques qui sont agencés parallèlement et en regard les uns par rapport aux autres, et transversalement (par exemple orthogonalement) à un axe optique de la cavité optique dudit générateur laser secondaire, tout en étant répartis le long dudit axe optique.

Dans un second mode de réalisation, ledit second moyen actif du générateur laser secondaire comporte simplement un barreau.

Par ailleurs, la cavité optique du générateur laser secondaire comporte, de façon avantageuse, une enveloppe qui est réalisée dans un matériau diffusant présentant une réflectivité qui est supérieure à 95%.

Ainsi, le faisceau de pompage (secondaire) subit des diffusions multiples avec de faibles pertes et finit par être absorbé par ledit second moyen actif, même si ce dernier est peu absorbant.

Les figures du dessin annexé feront bien comprendre comment l'invention peut être réalisée. Sur ces figures, des références identiques désignent des éléments semblables.

La figure 1 montre schématiquement une source laser conforme à l'invention.

La figure 2 montre en coupe transversale schématique un premier mode de réalisation d'une source laser conforme à l'invention.

La figure 3 montre schématiquement un second mode de réalisation d'une source laser conforme à l'invention.

La figure 4 est une coupe transversale schématique de la vue de la figure 3.

Les figures 5 et 6 sont respectivement des vues en coupes longitudinale et transversale d'une partie d'un système de pompage préféré de l'invention.

La figure 7 montre schématiquement une variante de réalisation d'une source laser conforme à l'invention.

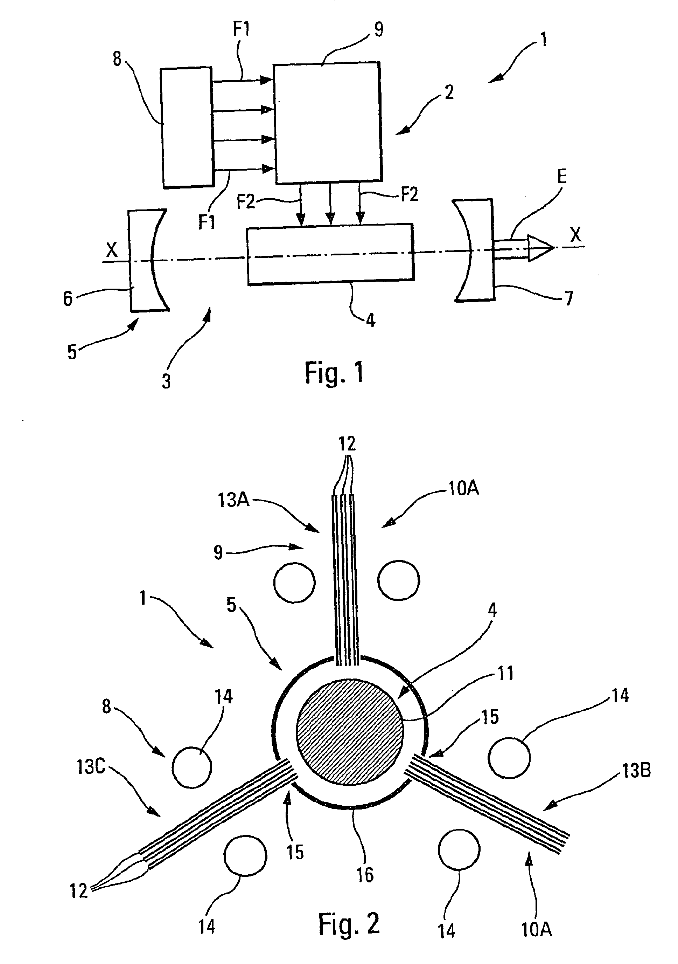

La source laser 1 représentée schématiquement sur la figure 1 comporte, de façon connue :
- un système de pompage 2 pour engendrer au moins un faisceau de pompage (secondaire) F2 ; et
- un générateur laser (secondaire) 3, qui comporte :
   . un moyen actif dopé 4 qui est susceptible d'absorber ledit faisceau de pompage F2 pour réaliser une amplification laser ; et
   . une cavité optique 5 de type usuel, d'axe X-X, comprenant notamment un miroir 6 réfléchissant et un miroir 7 légèrement transparent, qui sont placés en regard l'un de l'autre. Cette cavité optique 5 confère au faisceau laser E obtenu par ladite amplification laser et émis à travers ledit miroir 7 selon l'axe X-X, ses caractéristiques de directivité et de géométrie.

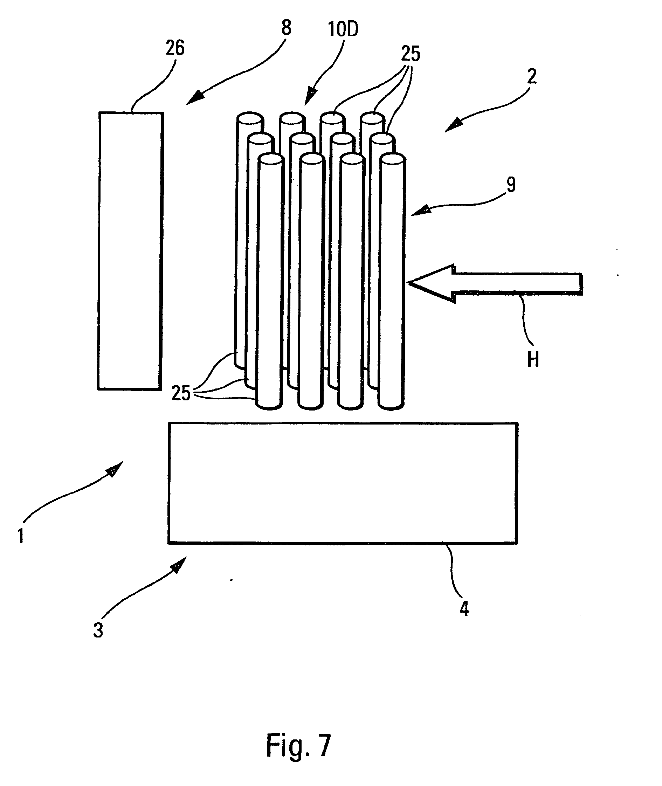

Selon l'invention, ledit système de pompage 2 comprend :
- une source lumineuse de pompage 8 qui est susceptible d'émettre au moins un faisceau de pompage (primaire) F1 et qui est réalisée sous forme d'une source pyrotechnique ; et
- un générateur laser (primaire) 9 comportant au moins un moyen actif dopé 10A, 10B, 10C, 10D qui présente au moins une dimension qui est inférieure à une valeur prédéterminée, de préférence 10 millimètres, et qui est susceptible d'absorber ledit faisceau de pompage F1 pour réaliser une amplification laser de sorte que ledit générateur laser 9 émette au moins un faisceau laser primaire monofréquence qui représente ledit faisceau de pompage F2 du générateur laser 3. Dans une première variante (figures 2 à 6), ledit moyen actif 10A, 10B, 10C est réalisé sous forme de plaques, tandis que, dans une seconde variante (figure 7), ledit moyen actif 10D comprend une pluralité de fibres, comme précisé ci-dessous.

De plus, ledit générateur laser 9 est agencé à l'extérieur de ladite cavité optique 5 du générateur laser 3, et ce dernier présente un décalage Stokes qui est faible et est au moins inférieur à une valeur prédéterminée, comme précisé ci-dessous.

Le décalage Stokes correspond au décalage en énergie entre l'énergie absorbée (énergie de pompage) et l'énergie émise (énergie du faisceau laser). Ce décalage Stokes est souvent caractérisé par le rapport des énergies : hνl/hνp (hνl : énergie d'un photon émis et hνp : énergie d'un photon de pompe). Ce rapport vaut par exemple 0,76 dans le cas d'un laser du type Nd:YAG pompé par diode laser à 808 nm. Il atteint 0,964 dans le cas d'un laser du type Ho:YAG émettant à 2,09 µm et pompé à 2,015 µm (qui est donc un laser à très faible décalage Stokes). S'il n'y a pas de fuite vers des états plus excités, le dépôt thermique Dth (défini comme le rapport entre l'énergie thermique déposée et l'énergie optique absorbée) est directement lié au décalage Stokes par la relation Dth = 1-(νl/νp).

De préférence, le décalage Stokes est inférieur à 0,1 eV par photon émis (photons formant le faisceau laser E de la source laser 1).

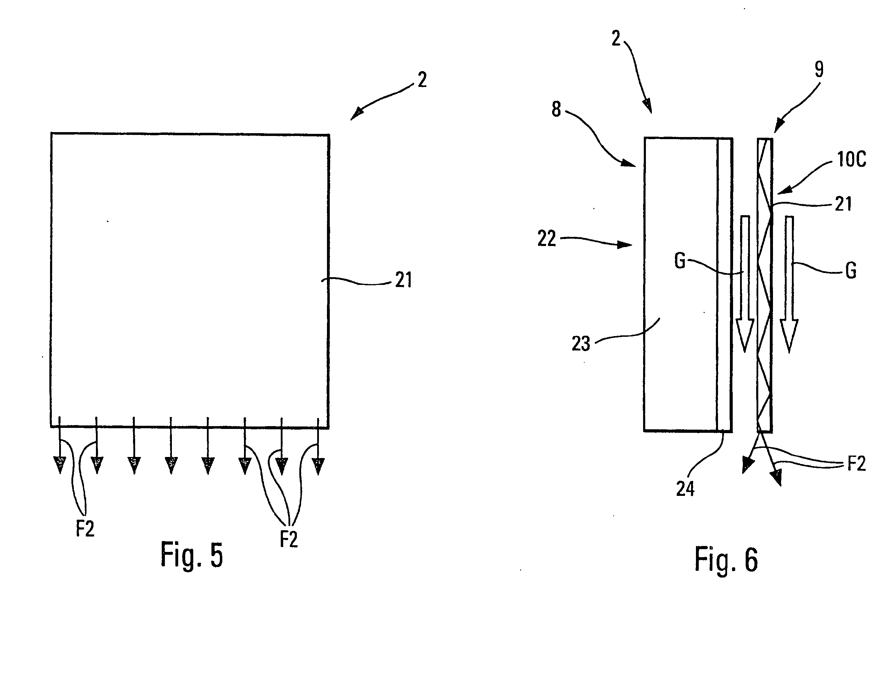

Ainsi, grâce à l'invention, ladite source laser 1 est susceptible d'émettre un faisceau laser E présentant une énergie élevée et une puissance moyenne importante. En effet :
- l'utilisation d'une source lumineuse 8 de type pyrotechnique, permet de stocker une quantité d'énergie très élevée dans un faible volume, généralement plus de 1 MJ par litre de produit actif, et donc de produire l'énergie lumineuse (élevée) nécessaire. De plus, la décharge lumineuse d'une telle source pyrotechnique 8 n'est pas destructrice, ce qui permet de prévoir un fonctionnement cadencé de la source laser 1 ;
- la réalisation du générateur laser 9 avec au moins une dimension (à savoir l'épaisseur pour une plaque et le diamètre pour une fibre) qui est inférieure à ladite valeur prédéterminée (10 mm par exemple) et son agencement à l'extérieur de la cavité optique 5 du générateur laser principal 3 permettent de prévoir un refroidissement efficace et rapide de la source laser 1, comme montré ci-dessous (figures 5 à 7). De plus, la réalisation sous forme de plaques ou de fibres engendre une résistance à la charge thermique beaucoup plus importante que celle d'une réalisation usuelle sous forme de barreau. On notera que le faisceau laser F2 engendré par un tel générateur laser 9 présente de très faibles qualités optiques, ce qui ne permet pas son utilisation comme générateur laser secondaire ou principal. En revanche, ce générateur laser (primaire) 9 remplit parfaitement la fonction nécessaire (forte puissance avec une grande résistance à la charge thermique) pour son utilisation comme source de pompage ; et
- l'action combinée du pompage monofréquence par le générateur laser 9 et du faible décalage Stokes du générateur laser 3 contribue également à réduire la production de chaleur.

On notera que le principal objectif de la source laser 1 conforme à l'invention est de fournir quelques impulsions laser successives d'énergie très élevée. Or, on sait qu'une composition pyrotechnique d'une masse de l'ordre de 1 kg est capable de fournir une énergie lumineuse utile d'environ 2 MJ. En supposant que les spectres d'émission du mélange pyrotechnique et d'absorption du moyen actif 10A, 10B, 10C, 10D soient bien adaptés, le rendement optique global peut atteindre 5%, soit une énergie finale émise de 100 kJ. Cette énergie correspond à une puissance de 1 MW pendant 100 ms. Le taux de répétition de la source laser 1 est limité par la vitesse de tir de la source pyrotechnique 8 (vitesse qui est, quant à elle, limitée par le temps d'éjection et de réarmement de cartouches pyrotechniques). A une cadence réaliste d'un tir toutes les cinq secondes, la puissance moyenne de pompage est donc de 400 kW et la puissance moyenne émise par la source laser 1 conforme à l'invention est alors de 20 kW.

On décrit tout d'abord la première variante de réalisation (figures 2 à 6), pour laquelle le moyen actif 10A, 10B, 10C est réalisé sous forme d'au moins une plaque.

Ledit moyen actif 10A, 10B, 10C du générateur laser 9 est, de préférence, un verre monofréquence qui est dopé avec des ions de terre rare (par exemple Er³⁺). En plus de verres classiques (phosphates ou silicates) qui sont performants avec un dopage au néodyme, on peut utiliser des verres fluorozircoaluminates qui sont adaptés à des dopages au thulium ou au holmium. En outre, avec un codopage ytterbium:erbium, on peu utiliser un verre phosphate. On peut également utiliser des matériaux laser de type céramique, obtenus par pressage de poudres cristallines à haute température, dont les propriétés thermomécaniques (en particulier la conductivité thermique) sont voisines de celles des cristaux et sont donc bien supérieures à celles des verres.

Par ailleurs, la source lumineuse pyrotechnique 8 de haute énergie doit présenter un spectre d'émission large, mais grossièrement adaptable aux bandes d'absorption du moyen actif pompé 10A, 10B, 10C, ce qui permet notamment de réduire la production de chaleur. Concernant sa composition chimique, on peut citer, à titre d'exemple, des couples combustible-oxydant, non explosifs, tels que Al-KClO₄ qui ont un fort rendement lumineux dans le spectre visible : plus de 30% de l'énergie totale produite lors de la combustion (10 kJ par gramme).

Selon l'invention, ledit générateur laser primaire 9 comprend une pluralité de plaques 12, 18, 21 qui sont uniformément réparties autour dudit second moyen actif 4 du générateur laser secondaire 3.

Dans un premier mode de réalisation représenté sur la figure 2 :
- ledit moyen actif 4 du générateur laser 3 comporte un barreau dopé 11 allongé, de section cylindrique et d'axe X-X ;
- ledit moyen actif 10A du générateur laser 9 comprend une pluralité de plaques 12, de préférence rectangulaires, qui sont groupées, par exemple par trois, et les groupes 13A, 13B et 13C ainsi formés (par exemple trois groupes) sont uniformément répartis autour dudit barreau dopé 11. Lesdites plaques 12 ont chacune au moins un bord qui est parallèle à l'axe X-X ; et
- ladite source pyrotechnique 8 comporte des cartouches pyrotechniques 14 sous forme de tubes allongés, qui sont agencées, à chaque fois, de part et d'autre des groupes 13A, 13B et 13C de plaques 12 dopées, parallèlement à l'axe X-X.

Pour un nombre donné de plaques 12 de verre dopé, un optimum est à chercher entre une répartition régulière des plaques 12 autour du barreau 11 et une répartition par groupes 13A, 13B, 13C. Il est préférable de ne pas descendre à moins de trois groupes pour obtenir une bonne homogénéité du pompage dans ledit barreau 11. En outre, un compromis doit être trouvé entre l'encombrement des cartouches pyrotechniques 14, l'homogénéité du pompage des plaques 12 et le nombre de telles plaques 12. On doit en effet limiter la surface des ouvertures 15 dans la cavité optique diffusante 5.

Ladite cavité optique 5 comporte une enveloppe 16 qui est réalisée dans un matériau diffusant présentant une réflectivité qui est supérieure à 95%. Ainsi, le faisceau de pompage F2 subit des diffusions multiples avec de faibles pertes et finit par être absorbé par ledit barreau actif 11, même si ce dernier est peu absorbant. On peut notamment utiliser, comme matériau diffusant, des poudrés diffusantes comme la magnésie, des matériaux synthétiques ou des céramiques qui présentent l'avantage d'une rigidité importante et d'une bonne tenue thermique.

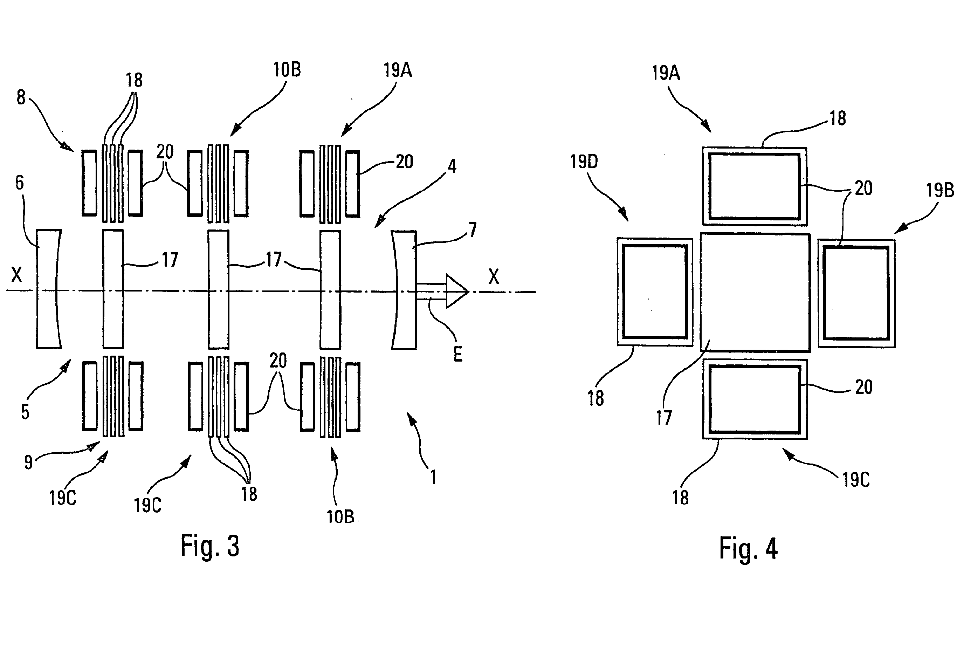

Dans un second mode de réalisation représenté sur les figures 3 et 4 :
- ledit moyen actif 4 du générateur laser 3 comporte une pluralité de plaques 17 de matériau actif, de forme carrée, qui sont agencées parallèlement et en regard les uns par rapport aux autres le long de l'axe optique X-X de la cavité optique 5. Les plans desdites plaques 17 sont orthogonaux à l'axe X-X ;
- ledit moyen actif 10B du générateur laser 9 comprend une pluralité de plaques 18, de préférence rectangulaires, qui sont disposées orthogonalement à l'axe X-X et qui sont groupées, par exemple par trois, et lesdits groupes 19A, 19B, 19C et 19D sont agencés en face de chaque côté de chacune desdites plaques 17 du moyen actif 4 ; et
- ladite source pyrotechnique 8 comporte des cartouches pyrotechniques 20 sous forme de plaques, qui sont agencées, à chaque fois, de part et d'autre de chacun des groupes 19A, 19B, 19C et 19D de plaques 18, en étant également orthogonales à l'axe X-X.

Les cartouches pyrotechniques 14, 20 sont donc réalisées, soit sous forme de tubes 14, soit sous forme de plaques 20. Dans les deux cas, le mélange pyrotechnique est inséré à l'intérieur de parois transparentes et résistantes (par exemple un verre épais) qui empêchent les produits de combustion de polluer ou de dégrader les faces optiques du générateur laser 9. On peut envisager que la propagation de la combustion soit inversée d'une cartouche à la suivante de façon à assurer un pompage permanent et plus homogène de tout le volume de verre dopé pendant l'impulsion laser. Ceci est particulièrement important pour un laser quasi trois niveaux. Des réflecteurs de forme adéquate sont disposés autour des cartouches 14, 20 et des plaques 12, 18 de verre dopé, pour optimiser l'homogénéité du dépôt. Après un tir laser, l'ensemble de la cartouche 14, 20 est éjecté et une nouvelle cartouche 14, 20 est introduite pour le tir suivant.

Par ailleurs, sur les figures 5 et 6, on a représenté partiellement un exemple de réalisation du système de pompage 2 refroidi. Le moyen actif 10C du générateur laser 9 est réalisé sous forme de plaque 21 et la source pyrotechnique 8 comporte une plaque 22 qui est agencée en regard de ladite plaque 21 et qui comprend une partie 23 contenant la composition chimique, ainsi qu'un verre de protection 24. De plus, des moyens usuels non représentés sont prévus pour engendrer l'écoulement d'un fluide de refroidissement qui est en contact des deux faces de ladite plaque 21, comme illustré par des flèches G, ce qui permet d'obtenir un refroidissement particulièrement efficace.

On décrit à présent la seconde variante de réalisation précitée, pour laquelle le moyen actif 10D du générateur laser 9 comporte une pluralité de fibres 25, comme représenté schématiquement sur la figure 7. Ces fibres 25 sont agencées parallèlement les unes par rapport aux autres, en rangées parallèles, et présentent chacune un diamètre qui est inférieur à la valeur prédéterminée (de préférence 10 mm) précitée.

Ainsi, lesdites fibres 25 peuvent être refroidies efficacement par l'intermédiaire d'un fluide de refroidissement, comme illustré par une flèche H.

Bien entendu, à l'exception de la réalisation du moyen actif du générateur laser 9 sous forme de plaque, les autres caractéristiques précitées en référence aux figures 1 à 6, et notamment les matériaux utilisés, s'appliquent par analogie à la source laser 1 représentée sur la figure 7.

Sur cette figure 7, pour des raisons de simplification du dessin, on a uniquement représenté les fibres 25 en ce qui concerne le générateur 9, fibres 25 qui sont agencées en face d'une cartouche pyrotechnique 26.

On notera que, de même qu'une plaque, ladite pluralité de fibres 25 est susceptible de fournir une puissance très élevée sans subir de rupture due à la charge thermique. Ceci ne serait, par exemple, pas possible avec un seul barreau usuel d'épaisseur plus importante. En effet, on sait que, globalement, pour un volume de matériau donné, la puissance extractible avant casse du matériau dépend de la longueur de matériau que le flux thermique doit traverser avant d'atteindre le fluide de refroidissement. Pour un barreau ou une fibre, la limite de rupture, en puissance volumique, est proportionnelle à 1/d2 où d correspond au diamètre du barreau ou de la fibre. Il apparaît donc que dans un lot de 100 fibres 25 présentant chacune un diamètre d = 1 mm, il est possible d'injecter 100 fois plus de puissance moyenne que dans un barreau unique de diamètre d = 1 cm, alors que la quantité de matériau est constante dans les deux cas.

## Revendications

1. Source laser susceptible d'émettre au moins un faisceau laser (E) et comportant :
- un système de pompage (2) pour engendrer au moins un faisceau de pompage secondaire (F2), ledit système de pompage (2) comprenant :
. une source lumineuse de pompage (8) susceptible d'émettre au moins un faisceau de pompage primaire (F1 ) ; et
. un générateur laser primaire (9) comportant au moins un premier moyen actif dopé (10A, 10B, 10C, 10D), qui est susceptible d'absorber ledit faisceau de pompage primaire pour réaliser une amplification laser de sorte que ledit générateur laser primaire (9) émette au moins un faisceau laser primaire monofréquence qui représente ledit faisceau de pompage secondaire (F2) ; et
- un générateur laser secondaire (3) comportant une cavité optique (5) et au moins un second moyen actif dopé (4), qui est susceptible d'absorber ledit faisceau de pompage secondaire (F2) pour réaliser une amplification laser de sorte que ledit générateur laser secondaire (3) émette un faisceau laser secondaire qui représente ledit faisceau laser (E) de la source laser (1),
**caractérisée en ce que** ladite source lumineuse de pompage (8) est une source pyrotechnique, **en ce que** ledit moyen actif (10A, 10B, 10C, 10D) dudit générateur laser primaire (9) présente au moins une dimension qui est inférieure à une valeur prédéterminée, **en ce que** ledit générateur laser primaire (9) est agencé à l'extérieur de ladite cavité optique (5) dudit générateur laser secondaire (3), et **en ce que** ledit générateur laser secondaire (3) présente un décalage Stokes qui est inférieur à une valeur prédéterminée.

2. Source laser selon la revendication 1,
**caractérisée en ce que** ladite source lumineuse de pompage (8) présente un spectre d'émission qui est adapté au spectre d'absorption du générateur laser primaire (9).

3. Source laser selon l'une des revendications 1 et 2,
**caractérisée en ce que** ladite valeur prédéterminée est égale à 10 millimètres.

4. Source laser selon l'une quelconque des revendications 1 à 3,
**caractérisée en ce que** ledit moyen actif (10D) dudit générateur laser primaire (9) comprend une pluralité de fibres (25), dont chacune présente un diamètre qui est inférieur à ladite valeur prédéterminée.

5. Source laser selon l'une quelconque des revendications 1 à 3,
**caractérisée en ce que** ledit moyen actif (10A, 10B, 10C) dudit générateur laser primaire (9) est réalisé sous forme d'au moins une plaque (12, 18, 21), dont l'épaisseur est inférieure à ladite valeur prédéterminée.

6. Source laser selon la revendication 5,
**caractérisée en ce que** ledit générateur laser primaire (9) comprend une pluralité de plaques (12, 18, 21) qui sont uniformément réparties autour dudit second moyen actif (4) du générateur laser secondaire (3).

7. Source laser selon l'une quelconque des revendications 1 à 6,
**caractérisée en ce que** ledit premier moyen actif (10A, 10B, 10C, 10D) du générateur laser primaire (9) comprend un verre qui est dopé avec des terres rares.

8. Source laser selon l'une quelconque des revendications 1 à 6,
**caractérisée en ce que** ledit premier moyen actif (10A, 10B, 10C, 10D) du générateur laser primaire (9) comprend un matériau céramique qui est dopé avec des terres rares.

9. Source laser selon l'une quelconque des revendications 1 à 8,
**caractérisée en ce que** ledit second moyen actif (4) du générateur laser secondaire (3) comprend un matériau cristallin qui est dopé avec des terres rares.

10. Source laser selon l'une quelconque des revendications 1 à 8,
**caractérisée en ce que** ledit second moyen actif (4) du générateur laser secondaire (3) comprend un matériau céramique qui est dopé avec des terres rares.

11. Source laser selon l'une quelconque des revendications 1 à 10,
**caractérisée en ce que** ledit second moyen actif (4) du générateur laser secondaire (3) comporte une pluralité de disques (17) agencés parallèlement et en regard les uns par rapport aux autres, et transversalement à un axe optique (X-X) de la cavité optique (5) dudit générateur laser secondaire (3), tout en étant répartis le long dudit axe optique (X-X).

12. Source laser selon l'une quelconque des revendications 1 à 10,
**caractérisée en ce que** le second moyen actif (4) du générateur laser secondaire (3) comporte un barreau (11).

13. Source laser selon l'une quelconque des revendications précédentes,
**caractérisée en ce que** la cavité optique (5) du générateur laser secondaire (3) comporte une enveloppe (16) qui est réalisée dans un matériau diffusant présentant une réflectivité qui est supérieure à 95%.

## Claims

1. Laser source typical of emitting at least one laser beam (E) and comprising:
- a pumping system (2) for generating at least one secondary pump beam (F2), said pumping system (2) comprising:
. a pump light source (8) capable of emitting at least one primary pump beam (F1) ; and
. a primary laser generator (9) that includes at least a first doped active means (10A, 10B, 10C, 10D), which is capable of absorbing said primary pump beam in order to cause laser amplification so that said primary laser generator (9) emits at least one single-frequency primary laser beam which represents said secondary pump beam (F2); and
- a secondary laser generator (3) comprising an optical cavity (5) and at least one second doped active means (4), which is capable of absorbing said secondary pump beam (F2) in order to cause laser amplification so that said secondary laser generator (3) emits a secondary laser beam that represents said laser beam (E) of the laser source (1),
**characterized in that** said pump light source (8) is a pyrotechnic source, **in that** said active means (10A, 10B, 10C, 10D) of said primary laser generator (9) has at least one dimension smaller than a predetermined value, **in that** said primary laser generator (9) is placed outside said optical cavity (5) of said secondary laser generator (3), and **in that** said secondary laser generator (3) has a Stokes shift that is smaller than a predetermined value.

2. Laser source according to Claim 1,
**characterized in that** said pump light source (8) has an emission spectrum that is adapted to the absorption spectrum of the primary laser generator (9).

3. Laser source according to either of Claims 1 or 2,
**characterized in that** said predetermined value is equal to 10 millimetres.

4. Laser source according to any one of Claims 1 to 3,
**characterized in that** said active means (10D) of said primary laser generator (9) comprises a plurality of fibres (25), each of which has a diameter that is smaller than said predetermined value.

5. Laser source according to any one of Claims 1 to 3,
**characterized in that** said active means (10A, 10B, 10C) of said primary laser generator (9) is produced in the form of at least one plate (12, 18, 21), the thickness of which is less than said predetermined value.

6. Laser source according to Claim 5,
**characterized in that** said primary laser generator (9) comprises a plurality of plates (12, 18, 21) that are uniformly distributed around said second active means (4) of the secondary laser generator (3).

7. Laser source according to any one of Claims 1 to 6,
**characterized in that** said first active means (10A, 10B, 10C, 10D) of the primary laser generator (9) comprises a glass doped with rare earths.

8. Laser source according to any one of Claims 1 to 6,
**characterized in that** said first active means (10A, 10B, 10C, 10D) of the primary laser generator (9) comprises a ceramic doped with rare earths.

9. Laser source according to any one of Claims 1 to 8,
**characterized in that** said second active means (4) of the secondary laser generator (3) comprises a crystalline material doped with rare earths.

10. Laser source according to any one of Claims 1 to 8,
**characterized in that** said second active means (4) of the secondary laser generator (3) comprises a ceramic doped with rare earths.

11. Laser source according to any one of Claims 1 to 10,
**characterized in that** said second active means (4) of the secondary laser generator (3) comprises a plurality of discs (17) which are placed so as to be mutually parallel, facing one another, and transverse to an optical axis (X-X) of the optical cavity (5) of said secondary laser generator (3), while being distributed along said optical axis (X-X).

12. Laser source according to any one of Claims 1 to 10,
**characterized in that** the second active means (4) of the secondary laser generator (3) comprises a rod (11).

13. Laser source according to any one of the preceding claims,
**characterized in that** the optical cavity (5) of the secondary laser generator (3) includes a shell (16) that is made of a scattering material having a reflectivity of greater than 95%.

## Patentansprüche

1. Laserquelle, die in der Lage ist, mindestens ein Laserbündel (E) auszusenden, und die umfasst:
- ein Pumpsystem (2), um mindestens ein sekundäres Pumpbündel (F2) zu erzeugen, wobei das Pumpsystem (2) umfasst:
• eine Pumplichtquelle (8), die in der Lage ist, mindestens ein primäres Pumpbündel (F1) auszusenden; und
• einen primären Lasergenerator (9) mit mindestens einem ersten dotierten aktiven Mittel (10A, 10B, 10C, 10D), das in der Lage ist, das primäre Pumpbündel zu absorbieren, um eine Laserverstärkung durchzuführen, so dass der primäre Lasergenerator (9) mindestens ein primäres Monofrequenz-Laserbündel aussendet, das das sekundäre Pumpbündel (F2) darstellt; und
- einen sekundären Lasergenerator (3) mit einem optischen Resonator (5) und mindestens einem zweiten dotierten aktiven Mittel (4), das in der Lage ist, das sekundäre Pumpbündel (F2) zu absorbieren, um eine Laserverstärkung durchzuführen, so dass der sekundäre Lasergenerator (3) ein sekundäres Laserbündel aussendet, das das Laserbündel (E) der Laserquelle (1) darstellt,
**dadurch gekennzeichnet, dass** die Pumplichtquelle (8) eine pyrotechnische Quelle ist, dass das aktive Mittel (10A, 10B, 10C, 10D) des primären Lasergenerators (9) mindestens eine Abmessung aufweist, die kleiner als ein vorbestimmter Wert ist, dass der primäre Lasergenerator (9) außerhalb des optischen Resonators (5) des sekundären Lasergenerators (3) angeordnet ist und dass der sekundäre Lasergenerator (3) eine Stokesverschiebung aufweist, die kleiner als ein vorbestimmter Wert ist.

2. Laserquelle nach Anspruch 1,
**dadurch gekennzeichnet, dass** die Pumplichtquelle (8) ein Emissionsspektrum aufweist, das an das Absorptionsspektrum des primären Lasergenerators (9) angepasst ist.

3. Laserquelle nach einem der Ansprüche 1 und 2,
**dadurch gekennzeichnet, dass** der vorbestimmte Wert gleich 10 Millimeter ist.

4. Laserquelle nach einem der Ansprüche 1 bis 3,
**dadurch gekennzeichnet, dass** das aktive Mittel (10D) des primären Lasergenerators (9) eine Vielzahl von Fasern (25) umfasst, von denen jede einen Durchmesser aufweist, der kleiner ist als der vorbestimmte Wert.

5. Laserquelle nach einem der Ansprüche 1 bis 3,
**dadurch gekennzeichnet, dass** das aktive Mittel (10A, 10B, 10C) des primären Lasergenerators (9) in Form von mindestens einer Platte (12, 18, 21) gebildet ist, deren Dicke kleiner ist als der vorbestimmte Wert.

6. Laserquelle nach Anspruch 5,
**dadurch gekennzeichnet, dass** der primäre Lasergenerator (9) eine Vielzahl von Platten (12, 18, 21) aufweist, die gleichmäßig um das zweite aktive Mittel (4) des sekundären Lasergenerators (3) verteilt sind.

7. Laserquelle nach einem der Ansprüche 1 bis 6,
**dadurch gekennzeichnet, dass** das erste aktive Mittel (10A, 10B, 10C, 10D) des primären Lasergenerators (9) ein Glas umfasst, das mit Seltenerden dotiert ist.

8. Laserquelle nach einem der Ansprüche 1 bis 6,
**dadurch gekennzeichnet, dass** das erste aktive Mittel (10A, 10B, 10C, 10D) des primären Lasergenerators (9) ein keramisches Material umfasst, das mit Seltenerden dotiert ist.

9. Laserquelle nach einem der Ansprüche 1 bis 8,
**dadurch gekennzeichnet, dass** das zweite aktive Mittel (4) des sekundären Lasergenerators (3) ein kristallines Material umfasst, das mit Seltenerden dotiert ist.

10. Laserquelle nach einem der Ansprüche 1 bis 8,
**dadurch gekennzeichnet, dass** das zweite aktive Mittel (4) des sekundären Lasergenerators (3) ein keramisches Material umfasst, das mit Seltenerden dotiert ist.

11. Laserquelle nach einem der Ansprüche 1 bis 10,
**dadurch gekennzeichnet, dass** das zweite aktive Mittel (4) des sekundären Lasergenerators (3) eine Vielzahl von Scheiben (17) umfasst, die parallel und einander gegenüberliegend und quer zu einer optischen Achse (X-X) des optischen Resonators (5) des sekundären Lasergenerators (3) angeordnet sind, wobei sie entlang der optischen Achse (X-X) verteilt sind.

12. Laserquelle nach einem der Ansprüche 1 bis 10,
**dadurch gekennzeichnet, dass** das zweite aktive Mittel (4) des sekundären Lasergenerators (3) einen Stab (11) umfasst.

13. Laserquelle nach einem der vorhergehenden Ansprüche,
**dadurch gekennzeichnet, dass** der optische Resonator (5) des sekundären Lasergenerators (3) eine Hülle (16) umfasst, die aus einem lichtstreuenden Material gefertigt ist, das einen Reflexionsgrad von über 95% aufweist.
